# EUROPEAN PATENT APPLICATION

(11) **EP 4 307 108 A1**
(43) Date of publication of application: **17.01.2024**
(21) Application number: 22790808.4
(22) Date of filing: 28.03.2022
(51) Int. Cl.: G06F 8/61

(54) **DATA PROCESSING METHOD AND APPARATUS**

(30) Priority: 23.04.2021 CN 202110444097
(71) Applicant: Petal Cloud Technology Co., Ltd., Dongguan, Guangdong 523799 (CN)
(72) Inventor: JIN, Youqi, Shenzhen, Guangdong 518129 (CN); WANG, Xing, Shenzhen, Guangdong 518129 (CN); CHEN, Qiuwei, Shenzhen, Guangdong 518129 (CN)
(74) Representative: Isarpatent
(86) International application number: PCT/CN2022/083418
(87) International publication number: WO 2022/222699

(57) **Abstract**

This application provides a data processing method and apparatus, and relates to the field of multimedia technologies. When the method is performed, an advertisement service platform may first obtain a first Android package APK of a software application used to present media data; then, encapsulate an advertisement software development kit SDK into a second APK of an advertisement carrier application; unpack the first APK to determine first APK directory information, and unpack the second APK to determine second APK directory information; consolidate the second APK directory information into the first APK directory information to obtain third APK directory information; and encapsulate the third APK directory information into the first APK. In this way, a case in which a developer needs to write advertisement code in software application code to present an advertisement in a software application can be avoided, so that a workload of the developer and development costs of advertisement integration can be reduced.

## Description

### CROSS-REFERENCE TO RELATED APPLICATION

This application claims priority to Chinese Patent Application No. 202110444097.5, filed with the China National Intellectual Property Administration on April 23, 2021 and entitled "DATA PROCESSING METHOD AND APPARATUS", which is incorporated herein by reference in its entirety.

### TECHNICAL FIELD

This application relates to the field of multimedia technologies, and in particular, to a data processing method and apparatus.

### BACKGROUND

With the continuous development and change of Internet technology, there is an increasing demand for users to obtain services through the Internet. Developers of some companies develop software applications to meet users' service requirements. Usually, an advertisement platform may provide an advertisement software development kit (software development kit, SDK) for integration with another software application, so that the software application presents an advertisement, and the software application may obtain a revenue by presenting the advertisement.

Currently, software application developers need to compile code based on the advertisement SDK development guide to pack advertisement-related code into the software application and present the advertisement. Developers compile code based on the advertisement SDK development guide, which not only consumes a lot of time, but also consumes a lot of labor. In addition, for some agents without source code, learning costs of advertisement SDK and development costs of integrating advertisement SDK need to be increased.

### SUMMARY

Based on this, this application provides a data processing method and apparatus, to reduce workload of a developer and reduce development costs of advertisement integration.

According to a first aspect, an embodiment of this application provides a data processing method. The method may be performed by an advertisement service platform, or may be performed by a server equipped with the advertisement service platform. This is not specifically limited in this application, and is merely described herein by using the advertisement service platform as an execution body. Advertisement information may be integrated into the software application with reference to the following steps, which specifically includes:
obtaining a first Android package (android package, APK) of a software application used to present media data; encapsulating an advertisement SDK into a second APK of an advertisement carrier application; unpacking the first APK to determine first APK directory information, and unpacking the second APK to determine second APK directory information; consolidating the second APK directory information into the first APK directory information to obtain third APK directory information; and encapsulating the third APK directory information into the first APK.

In this embodiment of this application, the advertisement service platform may encapsulate preset advertisement code into an APK of the software application used to present media data. The software application may present an advertisement. In this way, the advertisement can be presented when a user uses the software application without recompiling advertisement-related code by a developer of the software application, so that a workload of the developer can be effectively reduced, and at the same time development costs of advertisement integration are reduced.

In an optional implementation, the advertisement service platform may encapsulate the advertisement SDK and an entry calling class of the advertisement SDK into the second APK; and insert startup code of the entry calling class of the advertisement SDK into a specified location of the first APK directory information.

It should be noted that, an encoding rule of the advertisement SDK is different from the encoding rule of the APK. The advertisement service platform encapsulates the advertisement SDK and the entry calling class of the advertisement SDK into the APK. After the advertisement service platform constructs the second APK, it is easier to insert code related to the advertisement SDK into the APK of the software application. In addition, in this method, the developer of the software application does not need to compile advertisement-related code by himself, so that a workload of the developer can be reduced.

In an optional implementation, the specified location may be a bytecode smali file corresponding to a startup activity Activity class.

In an optional implementation, the advertisement service platform may consolidate one or more of the following information in the first APK directory information and the second APK directory information: an Android package list AndroidManfifest.xml file, an image resource, a layout file, a character string, a resource identifier (Identity document, ID), or the like.

In an optional implementation, consolidation of the resource ID includes: if a value of the resource ID corresponding to the first APK directory information is the same as that corresponding to the second APK directory information, determining a value range of the resource ID in the first APK directory information; and copying the resource ID of the second APK directory information into the first APK directory information, and adjusting the value of the resource ID of the second APK directory information based on the value range of the resource ID in the first APK directory information, where the value of the resource ID in the first APK directory information is different from the adjusted value of the resource ID in the second APK directory information.

In this way, when the value of the resource ID in the first APK directory information is the same as that in the second APK directory information, a case in which identity of the resource ID disorder occurs when the resource ID in the second APK directory information is consolidated into the first APK directory information can be avoided.

In an optional implementation, the second APK directory information may include a plurality of resource IDs. The advertisement service platform may determine a maximum value in the value range of the resource ID in the first APK directory information; and sequentially adjusting a value of an i^{th} resource ID of the second APK directory information to a preset value, where the preset value is the maximum value plus i, i is sequentially any positive integer from 1 to n, and n is a quantity of the resource IDs included in the second APK directory information.

By sequentially adjusting the value of the resource IDs in the second APK directory information, it can be ensured that the identity disorder does not occur when the resource IDs in the second APK directory information are consolidated into the first APK directory information.

In an optional implementation, the advertisement service platform may unpack the first APK through an Android package packing tool apktool to obtain the first APK directory information, and unpack the second APK through the apktool to obtain the second APK directory information.

According to a second aspect, an embodiment of this application provides a data processing apparatus, including: one or more processors; and one or more memories, where the one or more memories store one or more computer programs, the one or more computer programs include instructions, and when the instructions are executed by the one or more processors, the data processing apparatus is enabled to perform the following steps:
obtaining a first Android package APK of a software application used to present media data;
encapsulating an advertisement software development kit SDK into a second APK of an advertisement carrier application;
unpacking the first APK to determine first APK directory information, and unpacking the second APK to determine second APK directory information;
consolidating the second APK directory information into the first APK directory information to obtain third APK directory information; and
encapsulating the third APK directory information into the first APK.

In this embodiment of this application, the advertisement service platform may encapsulate preset advertisement code into an APK of the software application used to present media data. The software application may present an advertisement. In this way, the advertisement can be presented when a user uses the software application without recompiling advertisement-related code by a developer of the software application, thereby reducing a workload of the developer and at the same time reducing development costs of advertisement integration.

In an optional implementation, when the instructions are executed by the one or more processors, the data processing apparatus is enabled to specifically perform the following steps:
encapsulating the advertisement SDK and an entry calling class of the advertisement SDK into the second APK; and
inserting startup code of the entry calling class of the advertisement SDK into a specified location of the first APK directory information.

In an optional implementation, the specified location is a bytecode smali file corresponding to a startup activity Activity class.

In an optional implementation, when the instructions are executed by the one or more processors, the data processing apparatus is enabled to specifically perform the following steps:
consolidating one or more of the following information in the first APK directory information and the second APK directory information:
an Android package list AndroidManfifest.xml file, an image resource, a layout file, a character string, and a resource identifier ID.

In an optional implementation, when the instructions are executed by the one or more processors, the data processing apparatus is enabled to specifically perform the following steps:
if a value of the resource ID corresponding to the first APK directory information is the same as that corresponding to the second APK directory information, determining a value range of the resource ID in the first APK directory information; and copying the resource ID of the second APK directory information into the first APK directory information, and adjusting the value of the resource ID of the second APK directory information based on the value range of the resource ID in the first APK directory information, where the value of the resource ID in the first APK directory information is different from the adjusted value of the resource ID in the second APK directory information.

In an optional implementation, the second APK directory information includes a plurality of resource IDs; and when the instructions are executed by the one or more processors, the data processing apparatus is enabled to further perform the following steps:
determining a maximum value in the value range of the resource ID in the first APK directory information; and
sequentially adjusting a value of an i^{th} resource ID of the second APK directory information to a preset value, where the preset value is the maximum value plus i, i is sequentially any positive integer from 1 to n, and n is a quantity of the resource IDs included in the second APK directory information.

In an optional implementation, when the instructions are executed by the one or more processors, the data processing apparatus is enabled to further perform the following steps: unpacking the first APK through an Android package packing tool apktool to obtain the first APK directory information, and unpacking the second APK through the apktool to obtain the second APK directory information.

According to a third aspect, this application provides a computer-readable storage medium, where the computer-storage medium stores computer-readable instructions, and when a computer reads and executes the computer-readable instructions, the computer can perform the solution in any one of the implementations of the first aspect.

According to a fourth aspect, this application provides a computer program product. When a computer reads and executes the computer program product, the computer can perform the solution according to any one of the implementations of the first aspect.

For technical effects that can be achieved in any one of the second aspect to the fourth aspect, refer to the description of technical effects that can be achieved in a corresponding possible design solution in the first aspect. Details are not described herein again in this application.

### BRIEF DESCRIPTION OF DRAWINGS

FIG. 1 is a schematic diagram of an application scenario of an advertisement integration method;
FIG. 2 is a schematic diagram of an application scenario of an advertisement integration method according to an embodiment of this application;
FIG. 3 is a schematic flowchart of an advertisement integration method according to an embodiment of this application;
FIG. 4 is a schematic flowchart of an advertisement integration method according to an embodiment of this application;
FIG. 5 is a schematic flowchart of an advertisement integration method according to an embodiment of this application;
FIG. 6 is a schematic diagram of a media directory according to an embodiment of this application;
FIG. 7 is a schematic diagram of an ad_container directory according to an embodiment of this application;
FIG. 8 is a schematic diagram of merging AndroidManifest files according to an embodiment of this application;
FIG. 9 is a schematic diagram of merging AndroidManifest files according to an embodiment of this application;
FIG. 10 is a schematic diagram of merging picture resources according to an embodiment of this application;
FIG. 11 is a schematic diagram of merging smali files according to an embodiment of this application; and
FIG. 12 is a schematic diagram of a structure of an advertisement integration apparatus according to an embodiment of this application.

### DESCRIPTION OF EMBODIMENTS

To make the objectives, technical solutions, and advantages of this application clearer, the following describes the technical solutions in embodiments of this application in detail with reference to the accompanying drawings in embodiments of this application.

A data processing method mentioned in this application is mainly for data processing of media data, such as audio data and video data. This specification mainly uses how to integrate an advertisement in a media data application as an example for description herein. However, an actual application is not limited to integrating an advertisement in the media data application.

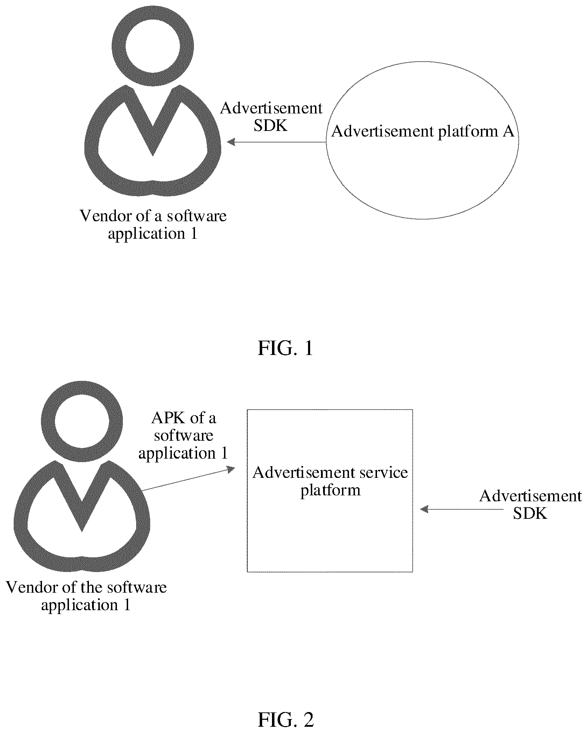

FIG. 1 is an application scenario of an advertisement integration method. The application scenario includes: a vendor of software application 1 and an advertisement platform A. In this figure, only the vendor of software application 1 is used as an example for description. In actual application, a type and a quantity of software application vendors are not limited. The advertisement platform A may generate an advertisement SDK based on a requirement of an advertisement content provider. Usually, a vendor of a software application may download the advertisement SDK through the advertisement platform A, and embed related code in the advertisement SDK into the software application. However, in general, after downloading the advertisement SDK, the vendor of the software application needs to recompile code to embed advertisement-related code into the software application. This manner consumes a lot of time and energy of the developer.

Based on this, an advertisement service platform is introduced in this application to embed the advertisement-related code into the software application. After obtaining a software application package provided by the vendor of the software application 1, and the advertisement SDK, the advertisement service platform integrates advertisement code in the advertisement SDK into package of the software application 1. When used by a user, the software application 1 has an advertisement display function.

FIG. 2 is an application scenario of an advertisement integration method according to an embodiment of this application. The application scenario includes: a vendor of software application 1 and an advertisement service platform. The advertisement service platform may receive an advertisement SDK from an advertisement platform. The vendor of software application 1 may upload a package of software application 1 to the advertisement service platform. The advertisement service platform may generate a package that integrates related advertisement code. When used by a user, software application 1 may have an advertisement display function without the need for the vendor of software application 1 to compile code to embed advertisement-related code into a software application.

It should be noted that, the advertisement service platform may be a service platform that processes only advertisement data, or may be the software application, or may be a functional module integrated in a server, or may be a plug-in, or the like. This is not specifically limited in this application. Any advertisement service platform that can integrate advertisement code into a package of a software application falls within the protection scope of this application regardless of whether the advertisement service platform exists in any form.

In this application, "and/or" describes an association relationship between associated objects, and indicates that three relationships may exist. For example, A and/or B may indicate: A only exists, both A and B exist, and B only exists, where A and B may be singular or plural. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

Reference to "an embodiment", "some embodiments", or the like described in the specification of this application indicates that one or more embodiments of this application include a specific feature, structure, or characteristic described with reference to embodiments. Therefore, statements "in one embodiment", "in some embodiments", "in some other embodiments", "in other embodiments" and the like that differ in this specification do not necessarily refer to a same embodiment, but rather means "one or more but not all embodiments", unless otherwise specified. The terms "include", "comprise", "have", and variations thereof all mean "including, but not limited to", unless otherwise particularly specified.

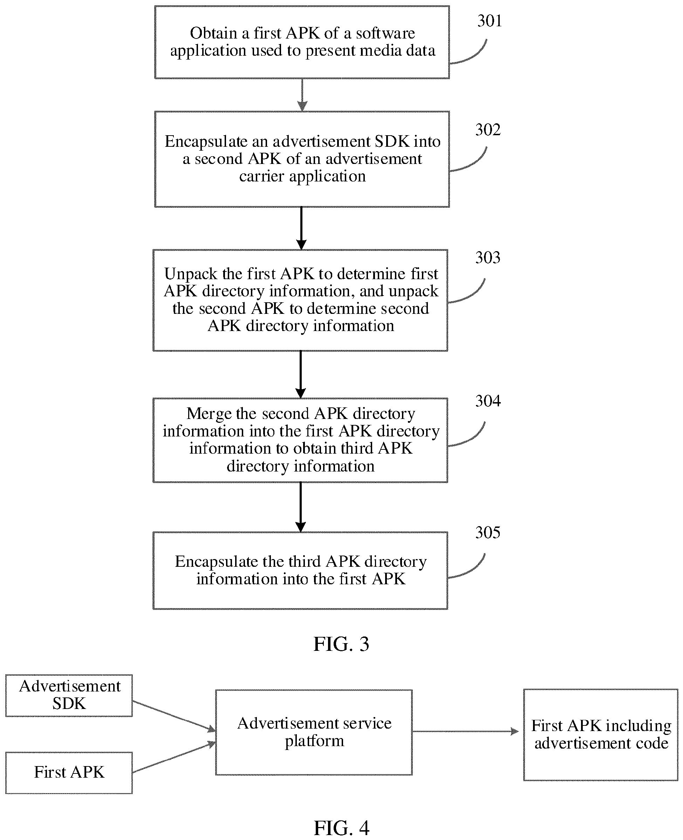

The advertisement integration method in this application may be applicable to the application scenario provided in FIG. 2. During actual execution, reference may be made to the steps of the data processing method shown in FIG. 3. The method may be performed by an advertisement service platform. Alternatively, execution may be performed by a server configured with a service related to the advertisement service platform, which is not specifically limited herein. In this application, an example in which an execution body is an advertisement service platform is merely used for description. Details are as follows:

Step 301: The advertisement service platform obtains a first APK of a software application used to present media data.

It should be noted that, advertisement code is not integrated in the first APK mentioned in step 301.

Step 302: The advertisement service platform encapsulates an advertisement SDK into a second APK of an advertisement carrier application.

It should be noted that, because data structures of packages of a same type are similar, in this embodiment of this application, the advertisement SDK is encapsulated in a package of a same type as the first package, that is, the APK, so that the advertisement service platform can better integrate advertisement-related program code into the first APK.

In an optional embodiment, the advertisement service platform may encapsulate the advertisement SDK and an entry calling class of the advertisement SDK into a second package, to determine from which location of corresponding program code in the first package to call the advertisement-related program after the advertisement service platform integrates the program code related to the advertisement into the first package.

Step 303: The advertisement service platform unpacks the first APK to determine first APK directory information, and unpacks the second APK to determine second APK directory information.

Step 304: The advertisement service platform consolidates the second APK directory information into the first APK directory information to obtain third APK directory information.

Step 305: The advertisement service platform encapsulates the third APK directory information into the first package.

In this embodiment of this application, the advertisement service platform may encapsulate preset advertisement code into the package of the software application. The software application may present an advertisement. In this way, a developer of the software application does not need to recompile advertisement-related code, so that a workload of the developer can be reduced, and development costs of advertisement integration can be reduced.

In an implementation, as shown in FIG. 4, an advertisement service platform may perform an operation on an advertisement SDK and a first APK, to generate the first APK including advertisement code. During specific execution, the advertisement service platform may encapsulate the advertisement SDK and an entry calling class of the advertisement SDK into a second APK, unpack the second APK to obtain second APK directory information, and unpack the first APK to obtain first APK directory information, after inserting startup code of the entry calling class of the advertisement SDK into a specified location of the first APK directory information, consolidate the first APK directory information and the second APK directory information to obtain third APK directory information, and pack the third APK directory information to generate the first APK including the advertisement code.

It should be noted that, a compilation rule of the advertisement SDK is different from the compilation rule of the APK. The advertisement SDK and the entry calling class of the advertisement SDK are encapsulated into the second APK, to better embed preset advertisement code into the first APK. In this method, the advertisement can be integrated in the software application without a developer of a software application to compile advertisement-related code by himself. This manner can reduce a workload of the developer.

In an implementation, the specified location may be a bytecode smali file corresponding to a startup Activity class, or may be another specified Activity class. This is not specifically limited in this application.

In addition, the advertisement service platform may unpack the first APK through an apktool to obtain the first directory information, unpack the second APK through the apktool to obtain the second directory information, or may obtain each APK directory information through another unpacking tool. This is not specifically limited in this application.

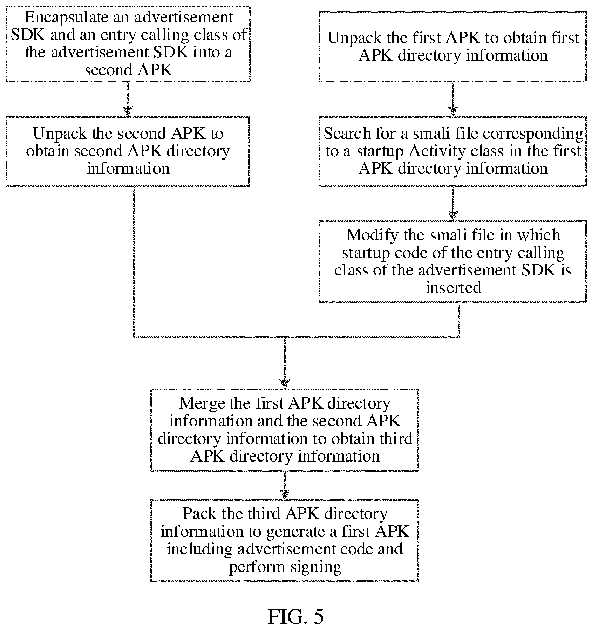

FIG. 5 is a specific schematic flowchart of an advertisement integration method according to an embodiment of this application. An advertisement SDK and an entry calling class of the advertisement SDK are encapsulated into a second APK. The second APK is unpacked to obtain second APK directory information. The first APK is unpacked to obtain first APK directory information. A smali file corresponding to a startup Activity class is searched in the first APK directory information. Then, the smali file is modified and startup code of the entry calling class of the advertisement SDK is inserted. The first APK directory information and the second APK directory information are consolidate to obtain third APK directory information. The third APK directory information is packed. The first APK that includes the advertisement code is generated and is signed.

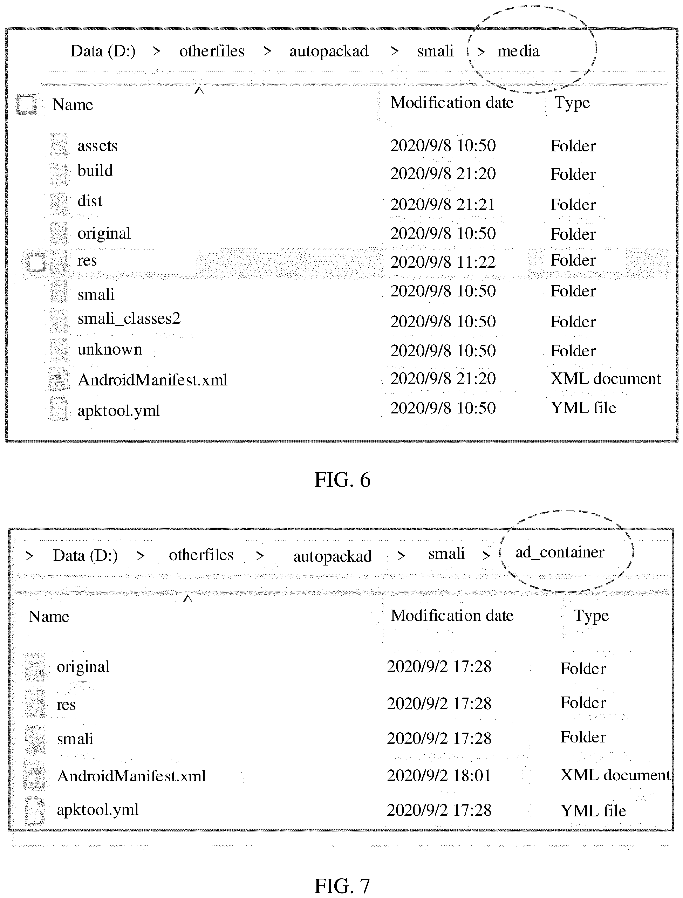

For example, unpacking, through the apktool, the APK of software application media (media) of a vendor, that is, the first APK, can generate a media directory shown in FIG. 6. The media directory includes: an AndroidManfifest.xml file, a smali file, and the like. Unpacking, through the apktool, the second APK of a carrier of the advertisement SDK, such as the APK of ad_container, can generate an ad_container directory. As shown in FIG. 7, the ad_container directory includes: an AndroidManfifest.xml file, a smali file, and the like.

It should be noted that, the advertisement service platform may insert the startup code (such as an interstitial advertisement) of the advertisement SDK into the media. A declaration of a startup Activity is searched in the AndroidManifest.xml in the media directory, that is, a node with <category android:name="android.intent.category.LAUNCHER"/> (an entry for starting the media).

For example, content of the node is as follows: 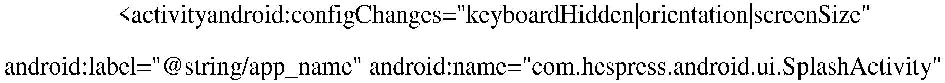 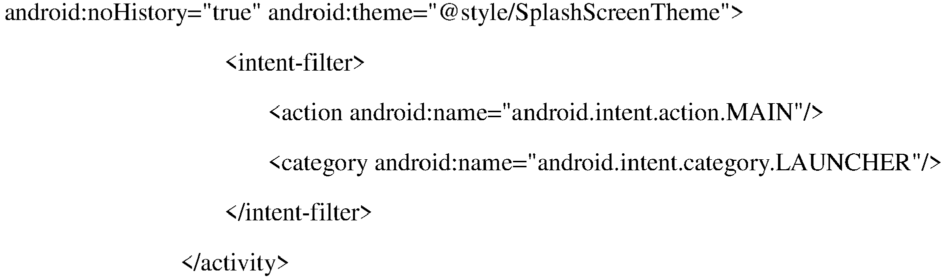 where SplashActivity in android:name="com.hespress.android.ui.SplashActivity" is the startup activity of an application.

in the directory starting with a smali file under media Follow a -path com/hespress/android/ui/SplashActivity to finda SplashActivity.smali file.

A code block starting with onCreate is searched in the SplashActivity.smali file, such as

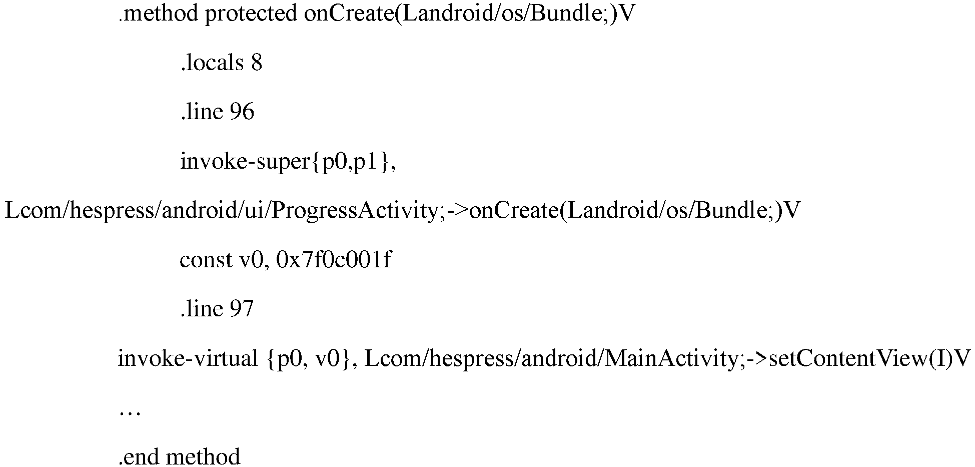

The startup code of the advertisement is inserted in the code block before an .end method. The inserted code is shown as the following underlined code:

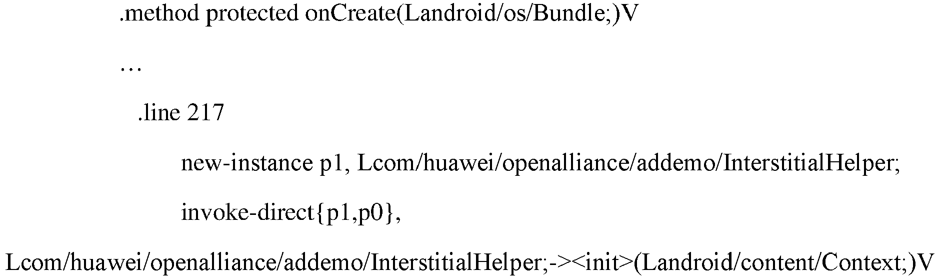

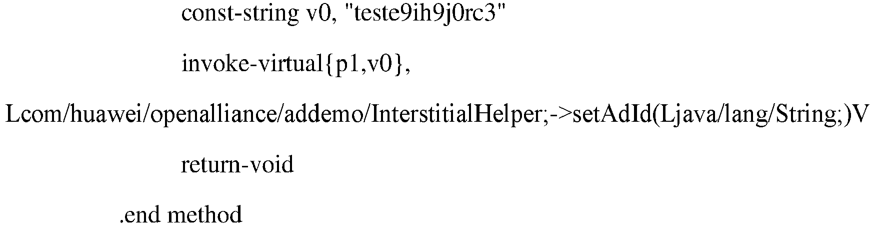

In an optional implementation, the advertisement service platform may consolidate the following information in the first APK directory information and the second APK directory information: an AndroidManfifest.xml file, an image resource, a layout file, a character string, and a resource ID.

Specifically, merging resources in the ad_container directory and the meida directory includes merging the AndroidManfifest.xml file, merging the image resource, merging the layout file, merging the character string, merging the id resource, other xml resources, and the like.

### (a). Merge AndroidManifest files

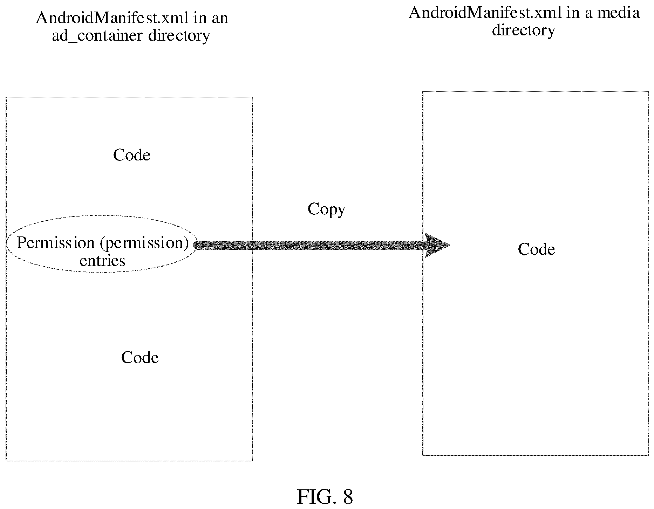

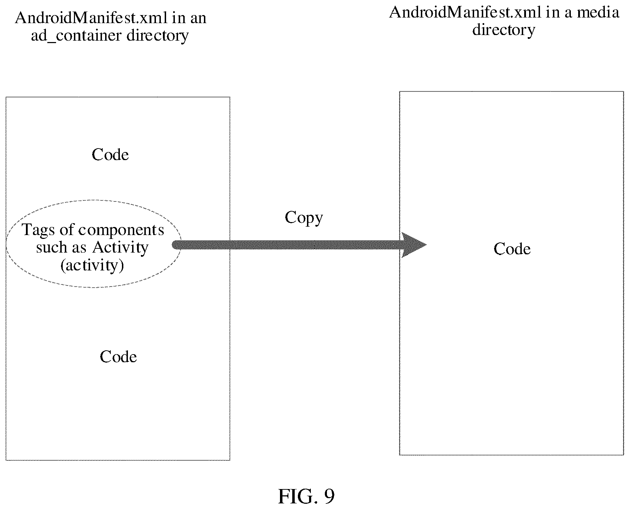

(1) AndroidManifest.xml is found in the ad_container directory. Uses-permission is searched in files. All permission (permission) entries (for example, <uses-permission android:name="android.permission.INTERNET"/>) are copied and inserted into AndroidManifest.xml in the media directory, as shown in Figure 8.
(2) The AndroidManifest.xml is searched in the ad_container directory. Tag content of all components such as activity are copied and inserted into the AndroidManifest.xml in the media directory, as shown in Figure 9.

The following is an example of the activity tag content:

```
          <activityandroid:exported="false"
 android:name="com.huawei.openalliance.ad.activity.PPSBridgeActivity"
 android:theme=" @ android: style/Theme.Translucent.NoTitleBar" >
          </activity>
```

### (b). Merge image resources

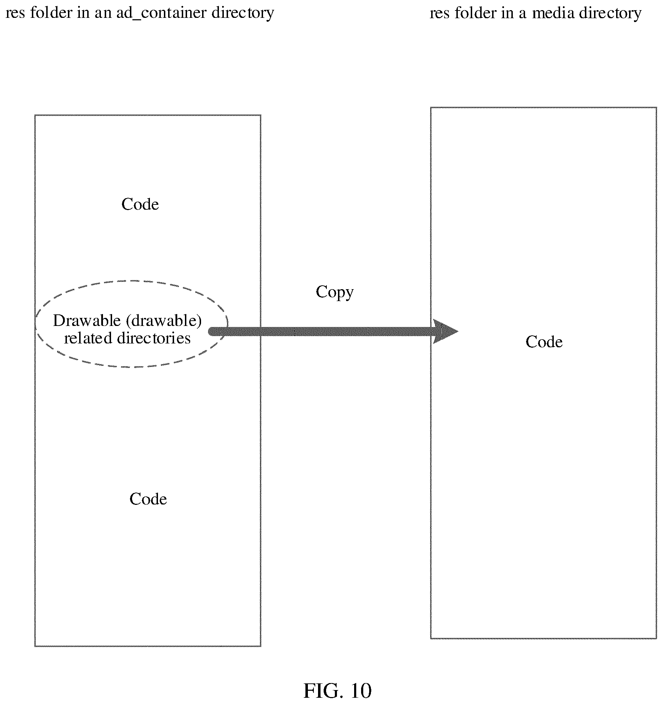

Drawable (drawable) related directories in a res file in the ad_container directory is merged into a res file in the media directory, as shown in Figure 10.

### (c). Merge layout files

Layout related files in the res file in the ad_container directory is merged into the res file in the media directory.

### (d). Merge character strings

Resource files such as character string, such as res/values/strings.xml, have a same file name as those in media. Therefore, files cannot be directly copied. Content in strings.xml needs to be added to media/res/values/strings.xml.

### (e). Merge id resource

In an optional implementation, consolidation of the resource ID is specifically as follows: If a value of the resource ID in the first APK directory (media directory) information is the same as that in the second APK directory (ad_container directory) information, a value range of the resource ID in the first APK directory information is determined. The resource ID of the second APK directory information is copied to the first directory information, and the value of the resource ID of the second APK directory information is adjusted based on the value range of the resource ID in the first APK directory information. The value of the resource ID in the first APK directory information is different from the adjusted value of the resource ID in the second APK directory information. For example, if the value of the resource ID of attr type in the ad_container directory is the same as the value of the resource ID of attr type in the media directory, the value range of the resource ID in the media directory is determined. If the value range is 0 to 50, after the resource ID of attr type in the ad_container directory can be copied to the media directory, the resource ID of attr type in the ad_container directory is recompiled from 51 and the resource ID of attr type in the ad_container directory can also be compiled only in odd bits. How to adjust the value of the resource ID of the second directory information is not specifically limited herein in this application.

In an optional implementation, the advertisement service platform may determine a maximum value of a resource ID in the value range of the resource ID in the first APK directory information; and sequentially adjust a value of an i^{th} resource ID of the second APK directory information to a preset value, where the preset value is the maximum value plus i, i is sequentially any positive integer from 1 to n, and n is a quantity of resource IDs included in the second APK directory information. To better describe the solution of this application, using that a type (type) is attr as an example, all ids of typpe="attr" in public.xml in ad_container are copied to public.xml in media. Because the id of attr type in the public.xml in the media ranges from Ox7f030000 to 0x7f0301ef, the ID copied from the public.xml in the ad_container increases from 0x7f0301f0. The id of other types is the same. Details are not described herein again.

The res/values/public.xml file lists ID values of all resources. For example, the ID value is "Ox7f010000", "0x7f010001", "0x7f010002", or the like. Details are not described here.

```
          <resources>
            <public type="attr" name="hiad_adId" id="0x7f010000" />
            <public type="attr" name="hiad_bannerSize" id="0x7f010001" />
            <public type="attr" name="hiad_roundCorner" id="0x7f010002" />
            <public type="color" name="emui_color_bg" id="0x7f020000" />
            <public type="color" name="hiad 0_percent black" id="0x7f020001" />
            <public type="color" name="hiad_10_percent black" id="0x7f020002" />
            <public type="color" name="hiad_10_percent white" id="0x7f020003" />
          <public type="color" name="hiad_15_percent white" id="0x7f020004" />
          </resources>
```

Because the public.xml in the ad_container has a same ID as the public.xml in the media, content of the public.xml in the ad_container cannot be directly added to the publlic.xml in the media. The id of different types needs to be combined, and the value of the id starts from the last one in the public.xml of a target (media) in ascending order.

(f). Merging other xml resources: The ad_container/res/xml directory only needs to be consolidated with the xml directory in media/res.

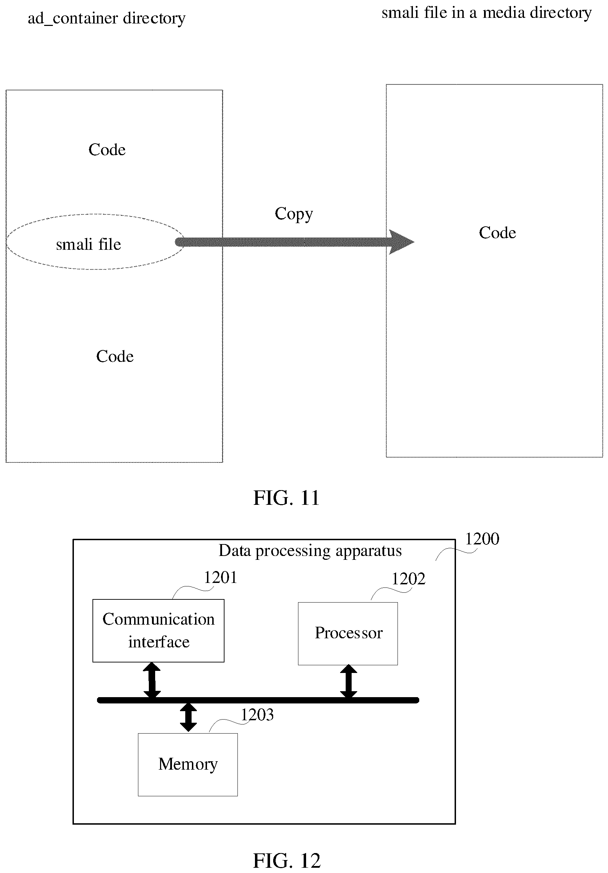

Then, the content of smali file in the ad_container directory is copied to the smali file in the media directory, as shown in Figure 11. Finally, the apktool is used to repack the media directory into an APK, and then use jarsiginer to sign the APK.

In this application, the advertisement service platform unpacks a target media APK and the advertisement SDK carrier APK, inserts the advertisement SDK startup code into the smali file of the startup Activity of the target media, and then performs AndroidManifest file merging, various resources merging, and smali code file merging. Finally, the APK is repacked and signed to generate a media application APK that includes an advertisement capability. To integrate the advertisement SDK in the existing manner, a developer needs to manually add to an SDK library and manually develop code to call an advertisement SDK function. In this application, the media application can integrate the advertisement SDK from a manual manner (that is, the developer recompiles code) to an automatic manner, to implement automatic integration of the advertisement SDK. Compared with the existing manner, the advertisement service platform provided in this application may unpack the APK, insert the advertisement SDK startup code into the smali file of the startup Activity of the target media, merge the AndroidManifest file, merge the image, merge the layout file, merge the character string, merge the id resource, and pack and re-sign to implement the automatic integration capability of the advertisement SDK. It should be noted that the advertisement SDK is encapsulated in the APK, so that the advertisement SDK and the target media APK can be combined. A vendor of a software application can integrate the advertisement SDK without source code. In addition, in this application, the advertisement service platform automatically searches for an entry in the target media APK and inserts advertisement startup code, thereby reducing learning costs for the developer and improving development efficiency.

Based on a same concept, FIG. 12 is an example of a schematic diagram of a structure of a data processing apparatus according to an embodiment of this application. As shown in FIG. 12, the data processing apparatus 1200 includes a communication interface 1201, a processor 1202, and a memory 1203. Further, the data processing apparatus 1200 may further include a bus system. The processor 1202, the memory 1203, and the communication interface 1201 may be connected through the bus system. The data processing apparatus may perform a data processing operation performed by an advertisement service platform. In addition, the advertisement service platform may also be loaded in the data processing apparatus. This is not specifically limited in this application.

The processor 1202 may be a chip. For example, the processor 1202 may be a field programmable gate array (field programmable gate array, FPGA), an application specific integrated circuit (application specific integrated circuit, ASIC), a system on chip (system on chip, SoC), a central processing unit (central processor unit, CPU), a network processor (network processor, NP), a digital signal processor (digital signal processor, DSP) circuit, a micro controller unit (micro controller unit, MCU), a programmable controller (programmable logic device, PLD), or another integrated chip.

It should be noted that the processor 1202 in this embodiment of this application may be an integrated circuit chip, and has a signal processing capability. In an implementation process, each step in the foregoing method embodiments may be completed through an integrated logic circuit of hardware in the processor or instructions in a form of software. The above processor may be a general purpose processor, a digital signal processor (DSP), an application specific integrated circuit (ASIC), a field programmable gate array (FPGA) or another programmable logic device, a discrete gate or a transistor logic device, and a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished through a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor.

The memory 1203 may be a volatile memory or a nonvolatile memory, or may include both volatile and nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through illustrative but not limited description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the system and method described herein are intended to include, but are not limited to, these and any other suitable types of memories.

The communication interface 1201 may be configured to input and/or output information. In an optional implementation solution, when a server includes a transceiver, steps of method performed by the communication interface 1201 may alternatively be performed by the transceiver.

The memory 1203 is configured to store computer execution instructions for performing embodiments of this application under the control of the processor 1202. The processor 1202 is configured to execute the computer execution instructions stored in the memory 1203, to implement the audio generation method provided in embodiments of this application. Alternatively, optionally, in this embodiment of this application, the processor 1202 may perform a processing-related function in the method of the data processing method provided in the following embodiment of this application. The communication interface 1201 is responsible for communicating with another device or a communication network. This is not specifically limited in this embodiment of this application. Optionally, the computer-executable instructions in this embodiment of this application may also be referred to as an application program code. This is not specifically limited in this embodiment of this application.

The data processing apparatus shown in FIG. 12 may perform the following steps:
Step S1: Obtain a first Android package APK of a software application used to present media data.
Step S2: Encapsulate an advertisement software development kit SDK into a second APK of an advertisement carrier application.
Step S3: Unpack the first APK to determine first APK directory information, and unpack the second APK to determine second APK directory information.
Step S4: Consolidate the second APK directory information into the first APK directory information to obtain third APK directory information.
Step S5: Encapsulate the third APK directory information into the first APK.

In this embodiment of this application, the data processing apparatus may encapsulate preset advertisement code into an APK of the software application used to present media data. The software application may present an advertisement. In this way, the advertisement can be presented when a user uses the software application without recompiling advertisement-related code by a developer of the software application, thereby reducing a workload of the developer and at the same time reducing development costs of advertisement integration.

In an optional implementation, when the instructions are executed by one or more processors, the data processing apparatus is enabled to specifically perform the following steps:
encapsulating the advertisement SDK and an entry calling class of the advertisement SDK into the second APK; and inserting startup code of the entry calling class of the advertisement SDK into a specified location of the first APK directory information.

In an optional implementation, the specified location is a bytecode smali file corresponding to a startup activity Activity class.

In an optional implementation, when the instructions are executed by the one or more processors, the data processing apparatus is enabled to specifically perform the following steps:
consolidating one or more of the following information in the first APK directory information and the second APK directory information:
an Android package list AndroidManfifest.xml file, an image resource, a layout file, a character string, and a resource identifier ID.

In an optional implementation, when the instructions are executed by the one or more processors, the data processing apparatus is enabled to specifically perform the following steps:
if a value of the resource ID corresponding to the first APK directory information is the same as that corresponding to the second APK directory information, determining a value range of the resource ID in the first APK directory information; and copying the resource ID of the second APK directory information into the first APK directory information, and adjusting the value of the resource ID of the second APK directory information based on the value range of the resource ID in the first APK directory information, where the value of the resource ID in the first APK directory information is different from the adjusted value of the resource ID in the second APK directory information.

In this way, when the value of the resource ID in the first APK directory information is the same as that in the second APK directory information, a case in which identity of the resource ID disorder occurs when the resource ID in the second APK directory information is consolidated into the first APK directory information can be avoided.

In an optional implementation, the second APK directory information includes a plurality of resource IDs. When the instructions are executed by the one or more processors, the data processing apparatus is enabled to further perform the following steps:
determining a maximum value in the value range of the resource ID in the first APK directory information; and sequentially adjusting a value of an i^{th} resource ID of the second APK directory information to a preset value, where the preset value is the maximum value plus i, i is sequentially any positive integer from 1 to n, and n is a quantity of the resource IDs included in the second APK directory information.

By sequentially adjusting the value of the resource IDs in the second APK directory information, it can be ensured that the identity disorder does not occur when the resource IDs in the second APK directory information are consolidated into the first APK directory information.

In an optional implementation, when the instructions are executed by one or more processors, the data processing apparatus is enabled to further perform the following steps: unpacking the first APK through an Android package packing tool apktool to obtain the first APK directory information, and unpacking the second APK through the apktool to obtain the second APK directory information.

Based on the foregoing embodiments, an embodiment of this application further provides a readable storage medium. The readable storage medium stores instructions. When the instructions are executed, the method performed by the data processing device in any one of the foregoing embodiments is implemented. The readable storage medium may include: any medium that can store program code, such as a USB flash drive, a removable hard disk, a read-only memory, a random access memory, a magnetic disk, or an optical disc.

A person skilled in the art should understand that embodiments of this application may be provided as a method, a system, or a computer program product. Therefore, this application may use a form of hardware-only embodiments, software-only embodiments, or embodiments with a combination of software and hardware. Moreover, this application may use a form of a computer program product that is implemented on one or more computer-usable storage media (including but not limited to magnetic disk storage, a CD-ROM, an optical memory, and the like) that include computer-usable program code.

This application is described with reference to flowcharts and/or block diagrams of a method, an apparatus (a system), and a computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing apparatus to generate a machine, so that the instructions executed by a computer or the processor of another programmable data processing apparatus generate an apparatus for implementing a specific function in one or more processes in the flowcharts and/or in one or more blocks in the block diagrams.

These computer program instructions may be stored in a computer-readable memory that can guide the computer or another programmable data processing apparatus to work in a specific manner, so that the instructions stored in the computer-readable memory generate a product that includes an instruction apparatus. The instruction apparatus implements a specific function in one or more processes in the flowcharts and/or in one or more blocks in the block diagrams.

These computer program instructions may be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more processes in the flowcharts and/or in one or more blocks in the block diagrams.

## Claims

1. A data processing method, comprising:
obtaining a first Android package APK of a software application used to present media data;
encapsulating an advertisement software development kit SDK into a second APK of an advertisement carrier application;
unpacking the first APK to determine first APK directory information, and unpacking the second APK to determine second APK directory information;
consolidating the second APK directory information into the first APK directory information to obtain third APK directory information; and
encapsulating the third APK directory information into the first APK.

2. The method according to claim 1, wherein the encapsulating an advertisement software development kit SDK into a second APK of an advertisement carrier application comprises:
encapsulating the advertisement SDK and an entry calling class of the advertisement SDK into the second APK; and
before the consolidating the second APK directory information into the first APK directory information to obtain third APK directory information, the method further comprises:
inserting startup code of the entry calling class of the advertisement SDK into a specified location of the first APK directory information.

3. The method according to claim 2, wherein the specified location is a bytecode smali file corresponding to a startup activity Activity class.

4. The method according to claim 2 or 3, wherein the consolidating the second APK directory information into the first APK directory information comprises:
consolidating one or more of the following information in the first APK directory information and the second APK directory information:
an Android package list AndroidManfifest.xml file, an image resource, a layout file, a character string, and a resource identifier ID.

5. The method according to claim 4, wherein the consolidation of the resource ID comprises:
if a value of the resource ID corresponding to the first APK directory information is the same as that corresponding to the second APK directory information, determining a value range of the resource ID in the first APK directory information; and
copying the resource ID of the second APK directory information into the first APK directory information, and adjusting the value of the resource ID of the second APK directory information based on the value range of the resource ID in the first APK directory information, wherein
the value of the resource ID in the first APK directory information is different from the adjusted value of the resource ID in the second APK directory information.

6. The method according to claim 5, wherein the second APK directory information comprises a plurality of resource IDs; and the adjusting the value of the resource ID of the second APK directory information based on the value range of the resource ID in the first APK directory information comprises:
determining a maximum value in the value range of the resource ID in the first APK directory information; and
sequentially adjusting a value of an i^{th} resource ID of the second APK directory information to a preset value, wherein the preset value is the maximum value plus i, i is sequentially any positive integer from 1 to n, and n is a quantity of the resource IDs comprised in the second APK directory information.

7. The method according to any one of claims 1 to 6, wherein the unpacking the first APK to determine first APK directory information, and unpacking the second APK to determine second APK directory information comprises:
unpacking the first APK through an Android package packing tool apktool to obtain the first APK directory information, and unpacking the second APK through the apktool to obtain the second APK directory information.

8. A data processing apparatus, comprising:
one or more processors; and
one or more memories, wherein
the one or more memories store one or more computer programs, the one or more computer programs comprise instructions, and when the instructions are executed by the one or more processors, the data processing apparatus is enabled to perform the following steps:
obtaining a first Android package APK of a software application used to present media data;
encapsulating an advertisement software development kit SDK into a second APK of an advertisement carrier application;
unpacking the first APK to determine first APK directory information, and unpacking the second APK to determine second APK directory information;
consolidating the second APK directory information into the first APK directory information to obtain third APK directory information; and
encapsulating the third APK directory information into the first APK.

9. The apparatus according to claim 8, wherein when the instructions are executed by the one or more processors, the data processing apparatus is enabled to specifically perform the following steps:
encapsulating the advertisement SDK and an entry calling class of the advertisement SDK into the second APK; and
inserting startup code of the entry calling class of the advertisement SDK into a specified location of the first APK directory information.

10. The apparatus according to claim 9, wherein the specified location is a bytecode smali file corresponding to a startup activity Activity class.

11. The apparatus according to claim 9 or 10, wherein when the instructions are executed by the one or more processors, the data processing apparatus is enabled to specifically perform the following steps:
consolidating one or more of the following information in the first APK directory information and the second APK directory information:
an Android package list AndroidManfifest.xml file, an image resource, a layout file, a character string, and a resource identifier ID.

12. The apparatus according to claim 11, wherein when the instructions are executed by the one or more processors, the data processing apparatus is enabled to specifically perform the following steps:
if a value of the resource ID corresponding to the first APK directory information is the same as that corresponding to the second APK directory information, determining a value range of the resource ID in the first APK directory information; and
copying the resource ID of the second APK directory information into the first APK directory information, and adjusting the value of the resource ID of the second APK directory information based on the value range of the resource ID in the first APK directory information, wherein
the value of the resource ID in the first APK directory information is different from the adjusted value of the resource ID in the second APK directory information.

13. The apparatus according to claim 12, wherein the second APK directory information comprises a plurality of resource IDs; and when the instructions are executed by the one or more processors, the data processing apparatus is enabled to specifically perform the following steps:
determining a maximum value in the value range of the resource ID in the first APK directory information; and
sequentially adjusting a value of an i^{th} resource ID of the second APK directory information to a preset value, wherein the preset value is the maximum value plus i, i is sequentially any positive integer from 1 to n, and n is a quantity of the resource IDs comprised in the second APK directory information.

14. The apparatus according to any one of claims 8 to 13, wherein when the instructions are executed by the one or more processors, the data processing apparatus is enabled to specifically perform the following steps:
unpacking the first APK through an Android package packing tool apktool to obtain the first APK directory information, and unpacking the second APK through the apktool to obtain the second APK directory information.

15. A computer-readable storage medium, wherein the computer-readable storage medium stores computer-executable instructions, and when the computer-executable instructions are called by a computer, the computer is enabled to perform the method according to any one of claims 1 to 7.
